# EUROPEAN PATENT APPLICATION

(11) **EP 4 765 285 A1**
(43) Date of publication of application: **24.06.2026**
(21) Application number: 24872985.7
(22) Date of filing: 26.09.2024
(51) Int. Cl.: H01M 10/0562, H01M 10/052, C01B 17/22

(54) **SULFIDE-BASED SOLID ELECTROLYTE, METHOD FOR MANUFACTURING SAME, AND ALL-SOLID-STATE BATTERY COMPRISING SAME**

(30) Priority: 26.09.2023 KR 20230129763
(71) Applicant: LG Chem, Ltd., Seoul 07336 (KR)
(72) Inventor: CHUNG, Habin, Daejeon 34122 (KR); KIM, Jeongheon, Daejeon 34122 (KR); MIN, Sanghyuk, Daejeon 34122 (KR); LEE, Seong Ho, Daejeon 34122 (KR); PARK, Changhun, Daejeon 34122 (KR)
(74) Representative: Plasseraud IP
(86) International application number: PCT/KR2024/014625
(87) International publication number: WO 2025/071277

(57) **Abstract**

The present invention discloses a sulfide-based solid electrolyte, which is capable of having high ionic conductivity and improving the rate performance of a battery by using three types of halogen elements and adjusting the doping concentration thereof, a method of preparing the same, and an all-solid-state battery including the same.

## Description

### [Technical Field]

This application claims priority to and the benefit of Korean Patent Application No. 10-2023-0129763, filed on September 26, 2023, the disclosure of which is incorporated herein by reference in its entirety.

The present invention relates to a sulfide-based solid electrolyte, which has high ionic conductivity by adjusting the doping concentration of halogen elements, a method of preparing the same, and an all-solid-state battery including the same.

### [Background Art]

All-solid-state batteries are batteries in which a liquid electrolyte filling the space between the positive and negative electrodes of conventional secondary lithium batteries is replaced with a solid electrolyte. The all-solid-state battery is safe because a flammable solvent is not used in the battery and thus there is no risk of explosion. Also, the all-solid-state battery has attracted attention as a next-generation battery because Li metal or Li alloys can be used as a negative electrode material and thus the battery exhibits a higher energy density than conventional batteries.

The core materials that constitute solid electrolytes include polymers, sulfides, oxides, and the like, and among them, sulfide-based solid electrolytes having high ductility and high ionic conductivity are considered suitable for the production of high-capacity, large-scale batteries.

A sulfide-based solid electrolyte, which is represented by Li₆PS₅Cl and has an argyrodite crystal structure, has a lithium ion conductivity of about 2 mS/cm, which is somewhat superior to conventional materials but is not satisfactory for application to next-generation battery technology that requires a high lithium ion conductivity of 5 mS/cm or more.

In order to further increase the ionic conductivity of the sulfide-based solid electrolyte having an argyrodite crystal structure, a method in which both Cl and Br are included as halogen elements doped into the sulfide-based solid electrolyte, and doped in an excessive amount of 1 or more is known. However, in the case of the sulfide-based solid electrolyte, when lithium metal is used as a negative electrode of an all-solid-state battery, the excessively doped halogen elements cause a side reaction with the lithium metal, and thus battery performance may be degraded. Accordingly, a method of suppressing the side reaction using a lithium/indium alloy or the like instead of lithium metal as a negative electrode has been attempted. However, in this case, battery voltage drops to a level of 0.6 V, which may cause another problem in that energy density loss increases, so it is difficult to say that this method is a desirable alternative.

Although some documents disclose that ionic conductivity can be improved by further doping a halogen element iodine (I) in addition to Cl and Br, the resulting solid electrolyte exhibits a substantially low ionic conductivity of less than 4 mS/cm, and thus there is still a limitation on application to next-generation technology.

### [Disclosure]

### [Technical Problem]

The present invention is directed to providing a sulfide-based solid electrolyte capable of maintaining high ionic conductivity and improving the rate characteristics of a battery, and a method of preparing the same.

### [Technical Solution]

One aspect of the present invention provides a sulfide-based solid electrolyte represented by the following Chemical Formula 1:

[Chemical Formula 1] Li_{7-(x+y)-z}PS_{6-(x+y)-z}ClₓBr_{y}F_{z}

(In Chemical Formula 1, 1.3≤x+y≤1.7 and 0<z<0.2).

Another aspect of the present invention provides a method of preparing the sulfide-based solid electrolyte, which includes a step of mixing a Li-containing compound, P- and S-containing compounds, a Cl-containing compound, a Br-containing compound, and an F-containing compound to prepare a mixture, a thermal treatment step, and a pulverization step.

Still another aspect of the present invention provides an all-solid-state battery, which includes a positive electrode, a negative electrode, and a solid electrolyte layer interposed between the positive electrode and the negative electrode, wherein the solid electrolyte layer includes the sulfide-based solid electrolyte represented by Chemical Formula 1.

### [Advantageous Effects]

A sulfide-based solid electrolyte according to the present invention can have high ionic conductivity by using three types of halogen elements and appropriately adjusting the doping concentration thereof, and simultaneously prevent problems such as performance degradation and the like that occur when lithium metal is used as a negative electrode of an all-solid-state battery.

### [Description of Drawings]

FIG. 1 is an X-ray diffraction (XRD) spectrum of sulfide-based solid electrolytes of Examples 1 and 2.
FIGS. 2 to 7 are graphs of comparing the C-rate performance of all-solid-state batteries including sulfide-based solid electrolytes of Examples 1 and 2 and Comparative Examples 1 to 4.

### [Modes of the Invention]

Hereinafter, a sulfide-based solid electrolyte, a preparation method thereof, and a use thereof according to specific embodiments of the invention will be described in further detail.

Unless defined otherwise, all technical and scientific terms used herein are only used to describe exemplary embodiments and are not intended to limit the present invention. Singular expressions include plural expressions unless the context clearly indicates otherwise. In this specification, the term "include," "provide," or "have" is intended to designate the presence of the implemented features, numbers, steps, elements, or combinations thereof, and it should be understood that it does not exclude in advance the presence or addition of other features, numbers, steps, elements, or combinations thereof.

The present invention can be modified in various ways and can have several embodiments, and some embodiments will be described below in detail. However, this is not intended to limit the present invention to specific embodiments, and it should be understood to include all modifications, equivalents and substitutes included in the spirit and scope of the present invention.

### Sulfide-based solid electrolyte

A sulfide-based solid electrolyte of the present invention includes lithium, phosphorus, sulfur, and halogen elements, and as the halogen elements, three types of elements, Cl, Br, and F, are included.

Specifically, a sulfide-based solid electrolyte is represented by the following Chemical Formula 1:

[Chemical Formula 1] Li_{7-(x+y)-z}PS_{6-(x+y)-z}ClₓBr_{y}F_{z}

(In Chemical Formula 1, 1.3≤x+y≤1.7 and 0<z<0.2).

The sulfide-based solid electrolyte having the above chemical formula structure has an argyrodite crystal structure.

A solid electrolyte, which has an argyrodite crystal structure and a basic composition of Li₆PS₅Cl, has a low ionic conductivity of about 2 mS/cm, and when an excessive amount of halogen elements is doped into the solid electrolyte, ionic conductivity may be improved. However, when an excessive amount of halogen elements is doped, a side reaction with lithium metal, which is a negative electrode, occurs, and dendrites are generated, and thus battery performance may be degraded. Accordingly, the inventors of the present invention have found that, when a sulfide-based solid electrolyte includes three types of halogen elements, that is, Cl, Br, and F, while limiting a halogen element composition ratio as shown in Chemical Formula 1, ionic conductivity is increased, and the occurrence of a side reaction in a negative electrode and the generation of dendrites are suppressed, and thus battery performance can be improved. Based on this finding, the present invention was completed.

The argyrodite crystal structure is a structure in which a PS₄³⁻ structure is included as the main unit structure of the framework and the sites around the PS₄³⁻ structure are occupied by S and halogens surrounded by Li. In the unit lattice of the argyrodite crystal structure, a total of eight 4a and 4d sites are present, and these sites are randomly occupied by the anion S and halogen ions. Since halogens more weakly attract Li than S, the Li density around the site occupied by halogen elements is decreased. This difference in Li density increases the mobility of Li ions, and thus ionic conductivity is improved. When an excessive amount of halogen elements is used, the site occupancy of the halogen element can be increased, and accordingly, the mobility of Li ions and ion conductivity can be improved. In the present invention, all three types of halogen elements, Cl, Br, and F, are used, and due to the difference in the size and reactivity of Cl, Br, and F, the degree of disorder caused by the halogen elements can be increased, and accordingly, the mobility of Li ions can be further increased.

In Chemical Formula 1, x>0 and y>0 may be satisfied. In other words, as described above, the sulfide-based solid electrolyte of the present invention includes three types of halogen elements, that is, Cl, Br, and F.

The ionic conductivity of the sulfide-based solid electrolyte according to the present invention is affected by the doping concentration of Cl and Br among the halogen elements. In Chemical Formula 1, x represents the composition proportion (doping concentration) of a Cl element, y represents the composition proportion (doping concentration) of a Br element, x+y represents the sum of composition proportions (the sum of doping concentrations) of Cl and Br, and x/y represents the composition ratio (doping concentration ratio) of Cl to Br. In this case, it is preferable to satisfy 1.3≤x+y≤1.7 or 1.4≤x+y≤1.6 and x/y>1. Particularly, x and y may satisfy 0.1≤x≤1.6 or 0.6≤x≤1.2 and 0.1≤y≤1.2 or 0.4≤y≤1.0, respectively, and most preferably, x=1 and y=0.4 to 0.6.

In the above ranges, the sulfide-based solid electrolyte of the present invention can have a high ionic conductivity of 7.0 mS/cm or more, and improve performance when applied to an all-solid-state battery. The co-doped F may contribute to maintaining the high ionic conductivity resulting from Cl and Br and also serve to suppress a side reaction between the solid electrolyte and a negative electrode of an all-solid-state battery.

Generally, when lithium metal is used as a negative electrode in an all-solid-state battery, a side reaction in which a sulfide-based solid electrolyte is reduced by the lithium negative electrode occurs according to a charge/discharge cycle due to the low reductive stability of the solid electrolyte. Accordingly, interfacial resistance is increased, which reduces battery performance. Also, lithium unevenly grows toward a positive electrode to generate dendrites according to a charge/discharge cycle, thereby causing the battery to deteriorate.

By the additional doping of a halogen element F, the sulfide-based solid electrolyte according to the present invention may suppress the side reaction to decrease interfacial resistance, and may suppress the generation of dendrites to prevent battery performance from being degraded while maintaining high ionic conductivity.

The composition proportion (doping concentration) of the halogen element F may be expressed as z, and z satisfies a range of 0<z<0.2, preferably, 0.01≤z≤0.15 or 0.01≤z≤0.1. When the composition proportion (doping concentration) of F is outside the above range, ionic conductivity may be decreased below the standard, and as F reacts with Li ions to form an excessive amount of LiF in the battery, battery performance may be degraded.

According to an embodiment, the sulfide-based solid electrolyte represented by Chemical Formula 1 may be Li_{5.45}PS_{4.45}ClBr_{0.5}F_{0.05} or Li_{5.4}PS_{4.4}ClBr_{0.5}F_{0.1}.

The sulfide-based solid electrolyte represented by Chemical Formula 1 according to the present invention has lithium ion conductivity sufficient to operate a lithium battery at room temperature, that is, 25 °C and specifically has an ionic conductivity of 7.0 mS/cm or more or 7.5 mS/cm or more and 18.0 mS/cm or less. The ionic conductivity is derived from the resistance value of the Nyquist plot obtained by inputting 0.15 g of the sulfide-based solid electrolyte into a 13ϕ(mm) SUS mold, applying a pressure of 370 MPa for 1 minute, and measuring AC impedance in the range of 0.1 Hz to 7 MHz while maintaining 100 MPa. In this case, all property values are measured in a dry room at room temperature and a relative humidity of 0.7%.

The sulfide-based solid electrolyte of the present invention may exhibit peaks at positions of 2θ=14.5° to 16.5°, 2θ=24° to 26°, 2θ=28.5° to 30.5°, 2θ=30.5° to 32.5°, and 2θ=44° to 46° upon measurement of an X-ray powder diffraction (XRD) pattern according to Cu-Kα radiation at X-ray wavelengths (λ) of 1.5406 Å and 1.5444 Å.

### Method of preparing sulfide-based solid electrolyte

Another aspect of the present invention provides a method of preparing the sulfide-based solid electrolyte, which includes mixing a Li-containing compound, P- and S-containing compounds, a Cl-containing compound, a Br-containing compound, and an F-containing compound to prepare a mixture, and thermally treating the mixture.

Hereinafter, each step of the method will be described in detail.

### Mixing step (S1)

First, a lithium-containing compound, P- and S-containing compounds, a Cl-containing compound, a Br-containing compound, and an F-containing compound were prepared and mixed to prepare a mixture.

The lithium (Li)-containing compound, which is one of the raw materials, may be, for example, a lithium compound such as lithium sulfide (Li₂S), lithium oxide (Li₂O), or lithium carbonate (Li₂CO₃), or simply lithium metal.

The sulfur (S)-containing compound may be lithium sulfide or phosphorus sulfide.

The phosphorus (P)-containing compound may be, for example, a phosphorus sulfide such as diphosphorus trisulfide (P₂S₃) or diphosphorus pentasulfide (P₂S₅), a phosphorus compound such as sodium phosphate (Na₃PO₄), or simply phosphorus.

The Cl-, Br-, and F-containing compounds may be compounds represented by MQ.

Here, M may be Li, P, S, or a combination of the element with oxygen or sulfur, and Q is Cl, Br, or F.

For example, the Cl-containing compound may be LiCl, PCl₃, PCl₅, POCl₃, P₂Cl₄, SCl₂, or S₂Cl₂. Preferably, the Cl-containing compound is LiCl, PCl₅, or PCl₃, and more preferably, LiCl.

The Br-containing compound may be LiBr, PBr₃, POBr₃, or S₂Br₂. Preferably, the Br-containing compound is one or more selected from the group consisting of LiBr, PBr₅, and PBr₃, and more preferably, one or more selected from the group consisting of LiBr and PBr₃.

The F-containing compound may be LiF, PF₃, PF₅, SF₂, SF₄, SF₆, or S₂F₁₀, and preferably, LiF.

The content ratio of the lithium-containing compound, phosphorus-containing compound, sulfur-containing compound, and halogen-containing compounds may be adjusted according to the composition ratio of the finally prepared sulfide-based solid electrolyte, and is not particularly limited in the present invention.

The mixing step of the present invention may be performed by pulverization and mixing processes. Specifically, pulverization and mixing may be performed by applying mechanical energy using a planetary ball mill, a planetary mill, mechano fusion, a mortar, or an automatic grinder. If necessary, a non-polar organic solvent such as xylene, heptane, octane, or the like may be added. The material of the balls used in the pulverization and mixing is not particularly limited, and for example, alumina balls, zirconia balls, stainless balls, silicon nitride balls, tungsten carbide balls, or the like may be used.

According to an embodiment, when a planetary ball mill is used as a mixing device, pulverization and mixing may be performed at a rotational speed of 100 rpm to 800 rpm for 1 to 50 hours, but the present invention is not limited thereto. Preferably, 10 mm zirconia balls are input into a planetary ball mill, pulverization is performed at a speed of 400 rpm to 700 rpm, and then additional pulverization is performed using a mortar or an automatic grinder.

### Thermal treatment step (S2)

In this thermal treatment step, the obtained pulverized mixture is thermally treated to implement an argyrodite crystal structure.

The thermal treatment process may be performed at 300 °C to 600 °C. When the thermal treatment process is performed in the above temperature range, a homogeneous reaction occurs, and thus ionic conductivity can be improved while implementing an argyrodite crystal structure. Also, the thermal treatment process may be performed in an inert atmosphere, and the inert atmosphere may be an Ar atmosphere, an N₂ atmosphere, or a combination thereof.

### Pulverization step (S3)

A pulverization step may be performed using either dry pulverization or wet pulverization.

There is no particular limitation on the device used in pulverization as long as the objective of the present invention is achieved, and for example, a method such as medium-type pulverization such as a bead mill, a planetary ball mill, or the like, jet pulverization, cavitation pulverization, or the like may be used. Among them, a planetary ball mill is preferred. The pulverization conditions may be set so as to pulverize a solid electrolyte to a desired particle size.

Dry pulverization is performed by inputting sulfide-based solid electrolyte particles, which are the target of pulverization, in a dry state into a device such as a ball mill as described above. Wet pulverization is performed by dispersing sulfide-based solid electrolyte particles in an organic solvent and pulverizing the resulting slurry.

As the organic solvent that can be used in the wet pulverization, any one or more of an aliphatic organic solvent such as heptane, decane, hexane, or cyclohexane; and an aromatic organic solvent such as toluene, xylene, 1,2,4-trimethylbenzene, anisole, dimethoxybenzene, chlorobenzene, ethyl benzoate, or benzyl acetate are used. In this case, it is preferable that the solid concentration in the slurry for wet pulverization ranges from 2 wt% to 90 wt%, and more preferably, from 10 wt% to 80 wt%.

In the pulverization process, any one or more of dry pulverization and wet pulverization may be used, and they may be used in combination or performed two or more times.

After the pulverization, a classification process may be further performed as needed.

When wet pulverization is performed, the organic solvent may be removed through a drying process before the classification process, and if necessary, a solid-liquid separation process such as filtration, centrifugation, pressure filtration, or vacuum filtration may be further performed to separate the solid electrolyte particles and the organic solvent before the drying process.

### All-solid-state battery

Still another aspect of the present invention provides an all-solid-state battery including the sulfide-based solid electrolyte.

Specifically, the all-solid-state battery includes a positive electrode including a positive electrode active material, a negative electrode including a negative electrode active material, and a solid electrolyte layer including the sulfide-based solid electrolyte according to the present invention and interposed between the positive electrode and the negative electrode.

The sulfide-based solid electrolyte of the present invention has high ionic conductivity by adjusting the doping concentration of three types of halogen elements. Also, when lithium metal is applied as a negative electrode, a side reaction between the negative electrode and the solid electrolyte is suppressed, and thus battery performance may be prevented from being degraded.

The all-solid-state battery of the present invention may be produced by a typical method known in the art. For example, the all-solid-state battery may be produced by laminating a solid electrolyte layer between a positive electrode and a negative electrode and applying pressure to the laminate. In this case, the solid electrolyte layer may be adjusted to have various thicknesses by adjusting the performance of the all-solid-state battery and various process parameters, and the thickness may preferably be 1 mm to 10 mm, and more preferably, 3 mm to 4 mm.

In the present invention, the positive electrode includes a positive electrode current collector and a positive electrode active material layer formed on the positive electrode current collector.

The positive electrode active material layer includes a positive electrode active material, a binder, and a conductive material. The positive electrode may be manufactured by applying a positive electrode slurry including a positive electrode active material, a binder, a conductive material, and a solvent onto a positive electrode current collector.

The positive electrode current collector is not particularly limited as long as it does not cause a chemical change in the battery and has conductivity, and for example, stainless steel, aluminum, nickel, titanium, calcined carbon, or aluminum or stainless steel whose surface has been treated with carbon, nickel, titanium, silver, or the like may be used. Also, the positive electrode current collector may have fine irregularities formed on its surface to strengthen the bonding strength of the positive electrode active material, and may be used in various forms such as films, sheets, foils, nets, porous materials, foams, non-woven materials, and the like.

The positive electrode active material is a compound capable of reversibly intercalating and deintercalating lithium ions and may specifically include a lithium metal oxide including lithium and one or more metals such as cobalt, manganese, nickel, and aluminum.

More specifically, the lithium metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-y}Mn_{Y}O₂ (where 0<Y<1), LiMn_{2-z}Ni_{z}O₄ (where 0<Z<2), etc.), a lithium-nickel-cobalt-based oxide (e.g., LiNi_{1-Y1}Co_{Y1}O₂ (where 0<Y1<1), etc.), a lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), a lithium-nickel-manganese-cobalt-based oxide (e.g., Li(NiₚCo_{q}Mnᵣ₁)O₂ (where 0<p<1, 0<q<1, 0<r1<1, and p+q+r1=1), Li(Niₚ₁Co_{q1}Mnᵣ₂)O₄ (where 0<p1<2, 0<q1<2, 0<r2<2, and p1+q1+r2=2), etc.), or a lithium-nickel-cobalt-transition metal (M) oxide (e.g., Li(Niₚ₂Co_{q2}Mnᵣ₃MS₂)O₂ (where M is selected from the group consisting of Al, Fe, V, Cr, Ti, Ta, Mg, and Mo, p2, q2, r3, and s2 are atomic fractions of each independent element, and 0<p2<1, 0<q2<1, 0<r3<1, 0<s2<1, p2+q2+r3+s2=1), etc.), and any one or more compounds thereof may be included.

Considering the improvement of the capacity characteristics and stability of the battery, it is more preferable that the lithium metal oxide is LiCoO₂, LiMnO₂, LiNiO₂, a lithium-nickel-manganese-cobalt oxide (e.g., Li(Ni_{1/3}Mn_{1/3}Co_{1/3})O₂, Li(Ni_{0.6}Mn0₂Co0₂)O₂, Li(Ni_{0.5}Mn_{0.3}Co0₂)O₂, Li(Ni0₇Mn0₁₅Co_{0.15})O₂, Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.).

Considering the remarkable improvement effect according to the type and content ratio of the components forming the lithium composite metal oxide, it is more preferable that the lithium composite metal oxide is Li(Ni_{0.6}Mn_{0.2}Co0₂)O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, or the like.

The positive electrode active material may be included in an amount of 60 wt% to 99 wt%, preferably 70 wt% to 99 wt%, and more preferably 80 wt% to 98 wt% based on a total solid content excluding the solvent in the positive electrode slurry.

The binder is a component that helps the binding of the conductive material, the active material, and the current collector. Examples of the binder include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, a fluoroelastomer, and various copolymers thereof.

Typically, the binder may be included in an amount of 1 wt% to 20 wt%, preferably 1 wt% to 15 wt%, and more preferably 1 wt% to 10 wt% based on a total solid content excluding the solvent in the positive electrode slurry.

The conductive material is a component for further improving the conductivity of the positive electrode active material.

The conductive material is not particularly limited as long as it does not cause a chemical change in the battery and has conductivity, and for example, graphite; carbon-based materials such as carbon black, acetylene black, ketjen black, channel black, furnace black, lamp black, thermal black, and the like; conductive fibers such as carbon fiber, metal fiber, and the like; metal powders such as fluorocarbon, aluminum, and nickel powders and the like; conductive whiskers such as zinc oxide, potassium titanate, and the like; conductive metal oxides such as titanium oxide and the like; and conductive materials such as polyphenylene derivatives may be used

Typically, the conductive material may be included in an amount of 1 wt% to 20 wt%, preferably 1 wt% to 15 wt%, and more preferably 1 wt% to 10 wt% based on a total solid content excluding the solvent in the positive electrode slurry.

The solvent may include an organic solvent such as N-methyl-2-pyrrolidone (NMP) and may be used in an amount that provides a desirable viscosity when the positive electrode active material and optionally a binder and a conductive material are included. For example, the solvent may be included so that the concentration of solids including the positive electrode active material and optionally a binder and a conductive material is 50 wt% to 95 wt%, preferably 70 wt% to 95 wt%, and more preferably 70 wt% to 90 wt%.

The negative electrode may be manufactured, for example, by applying a negative electrode slurry including a negative electrode active material, a binder, a conductive material, and a solvent onto a negative electrode current collector, or a graphite electrode made of carbon (C) or a metal itself may be used as the negative electrode.

For example, when the negative electrode is manufactured by applying a negative electrode slurry onto a negative electrode current collector, the negative electrode current collector generally has a thickness of 3 to 500 µm. The negative electrode current collector is not particularly limited as long as it does not cause a chemical change in the battery and has high conductivity, and for example, copper, stainless steel, aluminum, nickel, titanium, calcined carbon, copper or stainless steel whose surface has been treated with carbon, nickel, titanium, silver, or the like, or aluminum-cadmium alloys may be used. Also, like the positive electrode current collector, the negative electrode current collector may have fine irregularities formed on its surface to strengthen the bonding strength of the negative electrode active material, and may be used in various forms such as films, sheets, foils, nets, porous materials, foams, non-woven materials, and the like.

As the negative electrode active material, one or more negative electrode active materials selected from the group consisting of natural graphite, artificial graphite, carbonaceous materials, metals (Me) such as lithium-containing titanium composite oxides (LTO), Si, SiOx, Sn, Li, Zn, Mg, Cd, Ce, Ni, or Fe, alloys of the metal (Me), oxides (MeOx) of the metal (Me), and composites of the metal (Me) and carbon may be used. As the negative electrode active material, specifically, a silicon-based negative electrode active material including silicon (Si), silicon oxide (SiOx), or a silicon alloy may be used. In this case, a thin and stable SEI layer having a siloxane bond is formed, and thus the high-temperature stability and lifespan characteristics of the battery may be further improved.

The negative electrode active material may be included in an amount of 60 wt% to 99 wt%, preferably 70 wt% to 99 wt%, and more preferably 80 wt% to 98 wt% based on a total solid content excluding the solvent in the negative electrode slurry.

The binder is a component that helps the binding of the conductive material, the active material, and the current collector. Examples of the binder include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an EPDM, a sulfonated EPDM, styrene-butadiene rubber, a fluoroelastomer, and various copolymers thereof.

Typically, the binder may be included in an amount of 1 wt% to 20 wt%, preferably 1 wt% to 15 wt%, and more preferably 1 wt% to 10 wt% based on a total solid content excluding the solvent in the negative electrode slurry.

The conductive material is a component for further improving the conductivity of the negative electrode active material. The conductive material is not particularly limited as long as it does not cause a chemical change in the battery and has conductivity, and for example, graphite such as natural graphite, artificial graphite, and the like; carbon black such as acetylene black, ketjen black, channel black, furnace black, lamp black, thermal black, and the like; conductive fibers such as carbon fiber and metal fiber; metal powders such as fluorocarbon, aluminum, and nickel powders and the like; conductive whiskers such as zinc oxide, potassium titanate, and the like; conductive metal oxides such as titanium oxide and the like; and conductive materials such as polyphenylene derivatives may be used.

The conductive material may be included in an amount of 1 wt% to 20 wt%, preferably 1 wt% to 15 wt%, and more preferably 1 wt% to 10 wt% based on a total solid content excluding the solvent in the negative electrode slurry.

The solvent may include water or an organic solvent such as NMP and may be used in an amount that provides a desirable viscosity when the negative electrode active material and optionally a binder and a conductive material are included. For example, the solvent may be included so that the concentration of solids including the negative electrode active material and optionally a binder and a conductive material is 50 wt% to 95 wt%, and preferably, 70 wt% to 90 wt%.

As the negative electrode, a metal thin film itself may be used when a metal itself is used, or a metal physically bonded, roll-pressed, or deposited on the negative electrode current collector may be used. In the deposition, a metal may be subjected to electrodeposition or chemical vapor deposition.

For example, the metal thin film itself or the metal bonded/roll-pressed/deposited on the negative electrode current collector may include one metal or an alloy of two metals selected from the group consisting of lithium (Li), nickel (Ni), tin (Sn), copper (Cu), and indium (In).

The production of the all-solid-state battery having the above-described configuration is not particularly limited in the present invention, and known methods may be used.

In the production of the all-solid-state battery of the present invention, electrodes including a positive electrode and a negative electrode are disposed and then shaped by applying pressure, thereby assembling a battery.

The assembled battery is installed inside an outer case and then sealed by heating and compression. As the outer case, a laminate pack made of aluminum or stainless steel, etc., or a cylindrical or prismatic metal container is very suitable.

Since the all-solid-state battery according to the present invention stably exhibits excellent discharge capacity, excellent output characteristics, and an excellent capacity retention rate as described above, it is useful in the fields of portable devices such as mobile phones, laptop computers, digital cameras, and the like, and electric vehicles such as hybrid electric vehicles (HEVs) and the like.

### [Examples]

Hereinafter, the present invention will be described in further detail with reference to examples. However, the present invention is not limited to these examples.

### [Example 1]

As raw material powders, Li₂S, P₂S₅, LiCl, LiBr, and LiF were prepared in amounts of 1.585 g, 1.935 g, 0.701 g, 0.756 g, and 0.023 g, respectively, input into a ZrO₂ container together with 10 mm ZrO₂ balls (6 times the total precursor amount), and mixed 16 times using a planetary ball mill at 600 rpm for 20 minutes each, and the resulting mixture was obtained from the container using a tool and pulverized using an automatic grinder for 10 minutes.

Subsequently, the resulting product was input into a furnace having an Ar atmosphere, thermally treated at 500 °C for 12 hours, and pulverized using an automatic grinder for 10 minutes. Then, 1.3 mm ZrO₂ balls and anisole (200 vol% of a solid electrolyte) were input into a planetary ball mill, and then pulverization was performed 3 times at 300 rpm for 10 minutes each. Afterward, the resulting product was classified through a 25 µm sieve and centrifuged at 10000 rpm for 10 minutes, the supernatant was discarded, and vacuum drying was performed at 80 °C to obtain a sulfide-based solid electrolyte with an argyrodite structure.

### [Example 2 and Comparative Examples 1 to 4]

Sulfide-based solid electrolytes of Example 2 and Comparative Examples 1 to 4 were prepared in the same manner as in Example 1, except that the content of raw material powders was changed as shown in the following Table 1.

**[Table 1]**

| | Li₂S (g) | P₂S₅ (g) | LiCl (g) | LiBr (g) | LiF (g) | LiI (g) |
|---|---|---|---|---|---|---|
| Example 1 | 1.585 | 1.935 | 0.701 | 0.756 | 0.023 | 0 |
| Example 2 | 1.590 | 1.940 | 0.666 | 0.758 | 0.045 | 0 |
| Comparative Example 1 | 1.581 | 1.929 | 0.736 | 0.754 | 0.000 | 0 |
| Comparative Example 2 | 1.599 | 1.952 | 0.596 | 0.763 | 0.091 | 0 |
| Comparative Example 3 | 1.518 | 1.900 | 0.725 | 0.742 | 0 | 0.113 |
| Comparative Example 4 | 1.342 | 1.819 | 0.694 | 0.711 | 0 | 0.434 |

### [Test Example 1]

Each sulfide-based solid electrolyte prepared in Examples 1 and 2 was pulverized and charged into a sample holder for X-ray powder diffraction (XRD), and XRD was performed using the Bruker D8 Endeavor XRD system by scanning at an applied voltage of 40 KV, an applied current of 15 mA, and a 0.02° step according to Cu Kα radiation (X-ray wavelengths (λ)=1.5406 Å and 1.5444 Å).

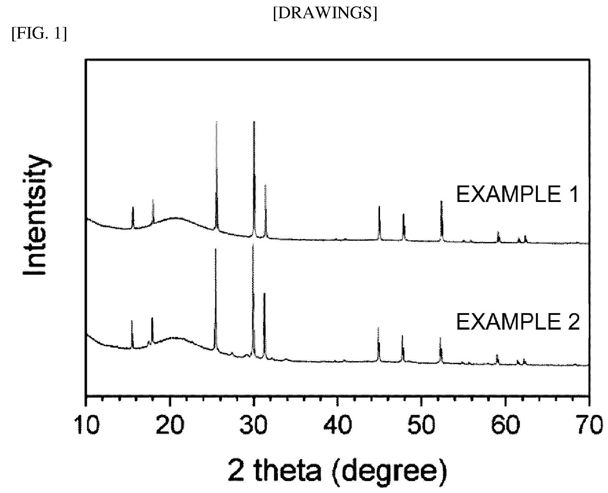

As a result of XRD measurement, peaks derived from the argyrodite crystal structure were observed. Specifically, as shown in FIG. 1, both of the sulfide-based solid electrolytes of Examples 1 and 2 exhibited peaks at positions of 20=14.5° to 16.5°, 2θ=24° to 26°, 2θ=28.5° to 30.5°, 2θ=30.5° to 32.5°, and 2θ=44° to 46°.

### [Test Example 2]

The composition proportion (doping concentration) and ionic conductivity of the sulfide-based solid electrolytes prepared in the examples and comparative examples were measured, and are shown in Table 2 below.

### (1) Inductively coupled plasma atomic emission spectroscopy (ICP-AES) analysis

The sulfide-based solid electrolyte was pulverized, input into a glass vial, dissolved using concentrated nitric acid, and treated with hydrogen peroxide so that the sample was completely decomposed. The sample was diluted to three different volumes and elementally analyzed according to a standard method using ICP-AES (GDC Integra XMP).

### (2) Measurement of ionic conductivity

Ionic conductivity was derived from the resistance value of the Nyquist plot obtained by inputting 0.15 g of the sulfide-based solid electrolyte into a 13ϕ SUS mold, applying a pressure of 370 MPa for 1 minute, and measuring AC impedance in the range of 0.1 Hz to 7 MHz while maintaining 100 MPa. All the measurements were performed in a dry room at room temperature and a relative humidity of 0.7%.

**[Table 2]**

| | Chemical Formula | x+y | x/y | z | σ (mS/cm) |
|---|---|---|---|---|---|
| Example 1 | Li_{5.45}PS_{4.45}ClBr_{0.5}F_{0.05} | 1.5 | 2 | 0.05 | 7.9 |
| Example 2 | Li_{5.4}PS_{4.4}ClBr_{0.5}F_{0.1} | 1.5 | 2 | 0.1 | 7.6 |
| Comparative Example 1 | Li_{5.5}PS_{4.5}ClBr_{0.5} | 1.5 | 2 | 0 | 8.4 |
| Comparative Example 2 | Li_{5.3}PS_{4.3}ClBr_{0.5}F_{0.2} | 1.5 | 2 | 0.2 | 4.8 |
| Comparative Example 3 | Li_{5.45}PS_{4.45}ClBr_{0.5}I_{0.05} | 1.5 | 2 | 0 | 6.5 |
| Comparative Example 4 | Li_{5.3}PS_{4.3}ClBr_{0.5}I_{0.2} | 1.5 | 2 | 0 | 3.8 |

As shown in Table 2, both of the sulfide-based solid electrolytes of Examples 1 and 2 exhibited an ionic conductivity of 7.0 mS/cm or more, that is, 7.9 mS/cm and 7.6 mS/cm, respectively, because the total composition proportion (doping concentration) of Cl and Br and the composition proportion (doping concentration) of F satisfy the ranges of Chemical Formula 1. On the other hand, Comparative Example 2 exhibited significantly low ionic conductivity compared to the examples because an excessive amount of F was included. Also, Comparative Example 4 including an excessive amount of I exhibited significantly low ionic conductivity compared to the examples.

Comparative Example 1 not including F as a halogen element exhibited higher ionic conductivity than the sulfide-based solid electrolytes of Examples 1 and 2, but when actually applied to a battery as described below, Comparative Example 1 exhibited poor battery performance compared to the examples.

In addition, Comparative Example 3 not including F but including a small amount of I as a halogen element exhibited higher ionic conductivity than the sulfide-based solid electrolytes of Comparative Examples 2 and 4, but exhibited lower ionic conductivity than the sulfide-based solid electrolytes of Examples 1 and 2.

When compared with Comparative Example 3, Comparative Example 4 can be seen to substantially include I as a halogen element, and it can be confirmed that the ionic conductivity was less than 4 mS/cm.

### [Test Example 3]

All-solid-state batteries were produced using the sulfide-based solid electrolytes prepared in the examples and comparative examples, and performance was tested.

### (1) Manufacture of battery

A LiNi_{0.8}Co_{0.1}Mn_{0.1} positive electrode active material (LG Chem.), a Li₆PS₅Cl solid electrolyte (LG Chem.), and a CNF conductive material (Sigma-Aldrich Inc.) were mixed in a weight ratio of 70:25:5, and the resulting mixture was laminated on a SUS current collector and pressed at a pressure of 480 MPa to manufacture a positive electrode.

Each sulfide-based solid electrolyte of the examples and comparative examples was laminated on the positive electrode and pressed at a pressure of 370 MPa, and Li foil (thickness: 100 µm) was added as a negative electrode thereon and pressed at a pressure of 30 MPa to assemble a battery.

### (2) Measurement of rate performance

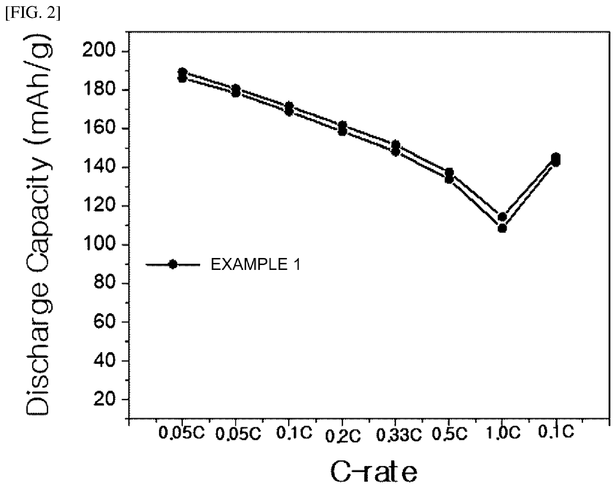

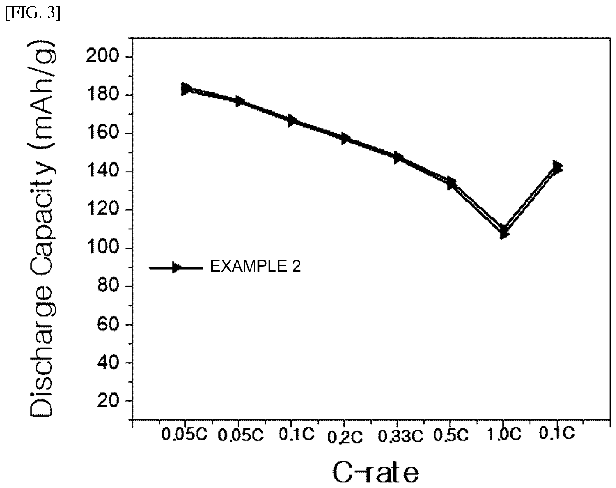

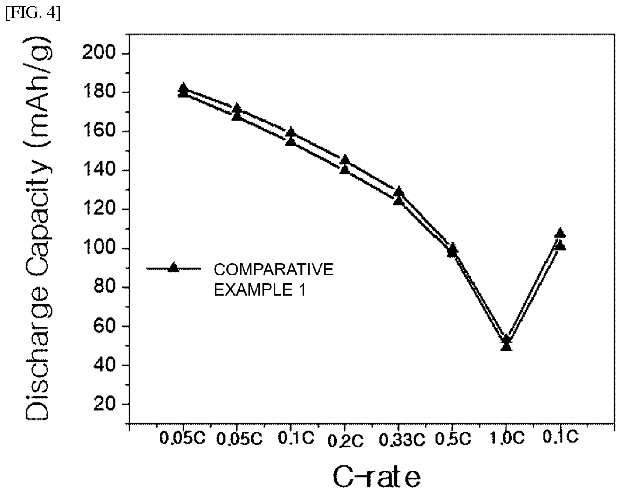

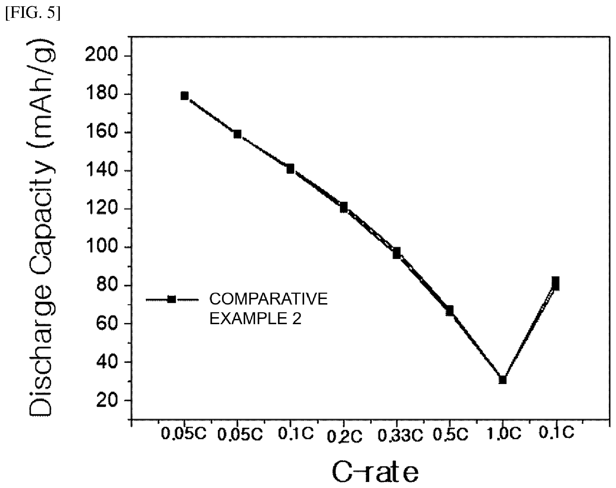

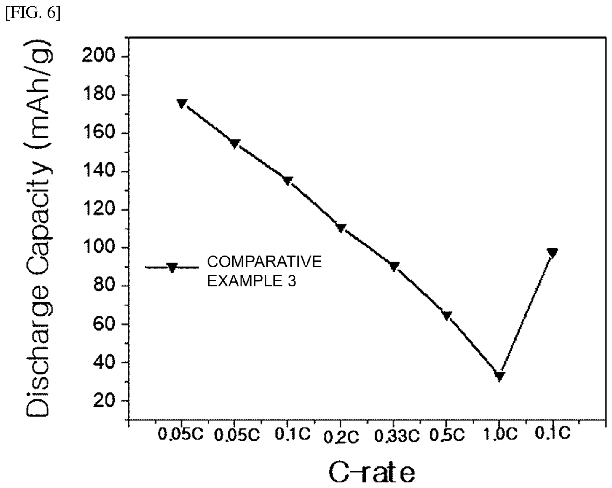

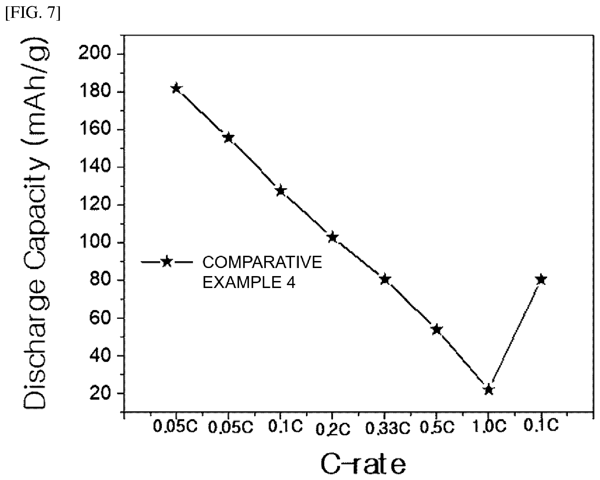

The manufactured battery was charged and discharged once at each of 0.05C, 0.05C, 0.1C, 0.2C, 0.33C, 0.5C, 1.0C, and 0.1C. Rate performance was calculated as the ratio of the discharge capacity at each C-rate to the initial discharge capacity (100%). Results are shown in FIGS. 2 to 7 and the following Table 3.

**[Table 3]**

| | Chemical Formula | Rate performance | |
|---|---|---|---|
| | | 0.1C | 1.0C |
| Example 1 | Li_{5.45}PS_{4.45}ClBr_{0.5}F_{0.05} | 90.6% | 69.4% |
| Example 2 | Li_{5.4}PS_{4.4}ClBr_{0.5}F_{0.1} | 88.9% | 68.6% |
| Comparative Example 1 | Li_{5.5}PS_{4.5}ClBr_{0.5} | 87.5% | 29.2% |
| Comparative Example 2 | Li_{5.3}PS_{4.3}ClBr_{0.5}F_{0.2} | 78.6% | 17.0% |
| Comparative Example 3 | Li_{5.45}PS_{4.45}ClBr_{0.5}I_{0.05} | 88.0% | 18.8% |
| Comparative Example 4 | Li_{5.3}PS_{4.3}ClBr_{0.5}I_{0.2} | 85.5% | 12.19% |

As shown in Table 3, the batteries including the solid electrolytes of Examples 1 and 2 exhibited superior rate performance to the battery including the solid electrolyte of Comparative Example 1.

As shown in Table 3, it can be confirmed that the solid electrolyte of Comparative Example 1 exhibited higher ionic conductivity than the solid electrolytes of the examples, but when actually applied to a battery, it exhibited degraded battery performance (rate performance). This can be interpreted to be due to the fact that the rate performance of the battery is degraded as the side reaction between the halogen elements (Cl and Br) and the lithium negative electrode occurs in the case of the sulfide-based solid electrolyte of Comparative Example 1. As a result, it can be confirmed that the sulfide-based solid electrolyte of Comparative Example 1 exhibited significantly degraded rate performance compared to the examples when the rate performance of the battery was measured at high rate discharge (1.0C).

Comparative Example 2, in which an excessive amount of F was doped, exhibited low ionic conductivity and significantly degraded rate performance.

As can be seen above, the batteries according to the examples and comparative examples showed a greater difference in performance at high rate discharge (1.0C) than at 0.1C. In particular, it can be confirmed that Comparative Examples 3 and 4 exhibited a similar level of rate performance at 0.1C to that of the examples, but rate performance was significantly degraded at high rate discharge (1.0C).

This shows that, when iodine (I), which is a halogen element, is further doped in addition to Cl and Br, the side reaction between the halogen elements (Cl and Br) and the lithium negative electrode more frequently occurs at high rate discharge (1.0C) than the case where I is not further doped, which can degrade battery performance.

In other words, when I is further doped in addition to Cl and Br, ionic conductivity can be decreased, and battery performance at high rate discharge (1.0C) can be degraded.

From the above results, it can be seen that the battery including the sulfide-based solid electrolyte of the present invention exhibits a very stable charge/discharge cycle, and the capacity does not significantly decrease even when the current density is increased 10 times.

## Claims

1. A sulfide-based solid electrolyte represented by the following Chemical Formula 1:
[Chemical Formula 1] Li_{7-(x+y)-z}PS_{6-(x+y)-z}ClₓBr_{y}F_{z}
(In Chemical Formula 1, 1.3≤x+y≤1.7 and 0<z<0.2).

2. The sulfide-based solid electrolyte of claim 1, wherein x/y>1.

3. The sulfide-based solid electrolyte of claim 1, wherein x>0 and y>0.

4. The sulfide-based solid electrolyte of claim 1, wherein 0.1≤x≤1.6 and 0.1≤y≤1.2.

5. The sulfide-based solid electrolyte of claim 1, wherein the sulfide-based solid electrolyte is one or more selected from Li_{5.45}PS_{4.45}ClBr_{0.5}F_{0.05} and Li_{5.4}PS_{4.4}ClBr_{0.5}F_{0.1}.

6. The sulfide-based solid electrolyte of claim 1, wherein the sulfide-based solid electrolyte has an argyrodite crystal structure.

7. The sulfide-based solid electrolyte of claim 1, wherein the sulfide-based solid electrolyte has an ionic conductivity of 7.0 mS/cm or more at 25 °C.

8. A method of preparing the sulfide-based solid electrolyte according to claim 1, comprising:
a step of mixing a lithium (Li)-containing compound, P- and S-containing compounds, a Cl-containing compound, a Br-containing compound, and an F-containing compound to prepare a mixture;
a thermal treatment step; and
a pulverization step.

9. The method of claim 8, wherein the thermal treatment is performed at 300 °C to 600 °C.

10. The method of claim 8, wherein the pulverization step is performed through dry pulverization or wet pulverization.

11. An all-solid-state battery comprising:
a positive electrode;
a negative electrode; and
a solid electrolyte layer interposed between the positive electrode and the negative electrode,
wherein the solid electrolyte layer includes the sulfide-based solid electrolyte according to any one of claims 1 to 7.
